Europäisches Patentamt

European Patent Office

Office européen des brevets

(11) Publication number: **0 379 350**
**A2**

## EUROPEAN PATENT APPLICATION

(21) Application number: **90300475.2**

(22) Date of filing: **17.01.90**

(51) Int. Cl.⁵: **G06F 11/34**

(30) Priority: **19.01.89 GB 8901197**

(43) Date of publication of application:
**25.07.90 Bulletin 90/30**

(84) Designated Contracting States:
**DE ES FR GB IT**

(71) Applicant: **BRITISH AEROSPACE PUBLIC LIMITED COMPANY**
**11 Strand**
**London WC2N 5JT(GB)**

(72) Inventor: **Fountain, James Graham**
**British Aerospace (Military Aircraft) Ltd.**
**Brough, North Humberside, HU15 1EQ(GB)**

(74) Representative: **Eastmond, John et al**
**British Aerospace plc Corporate IPR Department, Headquarters P.O. Box 87 Building Q191 Royal Aerospace Establishment**
**Farnborough Hants GU14 6YU(GB)**

(54) **Digital data bus loading monitors.**

(57) A databus loading monitor system providing real-time display of loading of a databus (1) being particularly suitable for use with a 1553 data bus. The system comprises a personal computer (2) and interface unit (3) connecting the computer (2) with the bus (1) via a transformer coupled stud (4). The interface unit (3) comprises circuitry (9, 10) for detecting periods of bus inactivity which it relays to the computer (2) to enable a bus loading figure to be calculated.

Fig.1.

EP 0 379 350 A2

## DIGITAL DATA BUS LOADING MONITORS

The present invention relates to electronic test equipment and in particular to equipment for the real-time monitoring of the loading of a digital data bus.

Modern data communication systems, distributed computer systems and electronic multi channel control systems often employ a common multi-lane data bus linking a plurality of electronic equipments and over which information and/or control signals are transmitted and received in serial or parallel digital data form. Often the data buses are duplicated and sometimes triplicated or quadruplated for safety, redundancy or voting purposes. The form of the messages transmitted over such databuses is often to an agreed standard to facilitate the interoperability of equipments designed to connect to the bus.

An example of such a standard data bus is the Mil-Standard 1553 (or STANAG 3838) DATABUS which is a military standard which has become one of the basic tools being used today for the integration of weapon systems. Other examples are the STANAG 3910 databus and "Digibus".

Such databuses operate with a timing structure composed of major frames (which repeat once every second or so) which are sub-divided into a number (typically fifty) of minor cycles. They can be called upon to carry data between electronic systems synchronously or asynchronously. Whilst it is possible for the designer of such systems to estimate the loading to which each channel of the data bus will be subject, in practice his estimates may well prove optimistic due to unforeseen demands on the system. It is important when designing, developing and operating such systems to be able to simultaneously monitor the data bus load variations with time in each channel of the system. It is an object of the present invention to provide such a databus load monitoring system which is capable of displaying graphically average and peak loading of a particular minor data cycle over a major data frame or the peak and average for a current major frame in a multi channel system.

The present invention consists of a digital data bus loading monitor characterised in that it comprises a general purpose computer programmed to compute and output signals corresponding to loading parameters, an interface unit including a random access memory and at least one data cycle counter and connected to the general purpose computer and means for coupling the interface unit to a multi-channel digital data bus.

Preferably the monitor further includes a display device connected to the computer so as to receive the computed load parameter signals. The display device may be a cathode ray tube (CRT) display or Liquid Crystal Display (LCD), for graphically displaying the loading in each data bus channel in bar code form or a printer for printing the computed parameters alpha-numerically.

The monitor operates by detecting the end of each data cycle and subsequently interrupting the computer. When the computer is interrupted it reads an address register which contains the address of the location where the time remaining at the end of the current minor cycle will be stored. Software pre-programmed into the computer then uses the address received on the last interrupt to obtain the time remaining at the end of the previous data cycle and hence calculate the bus loading figure.

In addition to providing the time for the end of the data cycle the monitor stores all command, data and status words in a memory. Preferably, the memory is chosen to be large enough to store at least two minor cycles at 18Hz or above, preferably working down to 16Hz.

An embodiment of the invention will now be described by way of example only and with reference to the accompanying drawings of which:-

Figure 1 shows in block schematic form a data bus loading monitor in accordance with the present invention; and

Figure 2 shows a block circuit diagram of a 1553 card which comprises part of the monitor of Figure 1.

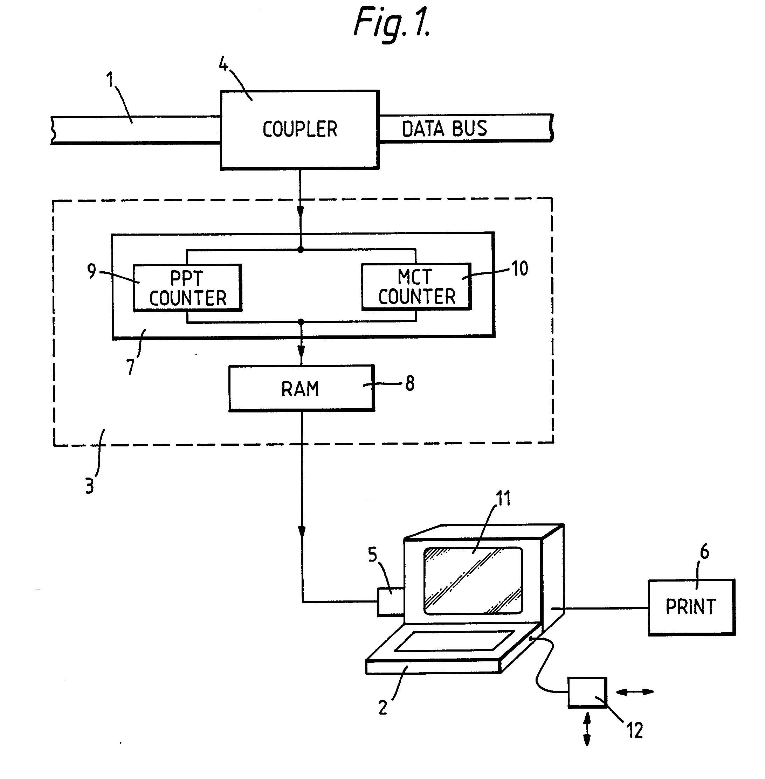

The Bus Loading Monitor System of Figure 1 provides realtime display of the loading of a dual redundant 1553B bus 1. The System is comprised of a Commodore AMIGA A500 Personal Computer 2, with an associated CRT 11 and mouse 12, an interface 3 to the 1553B dual redundant Bus 1 and a suitable program. The interface unit 3 connects to the bus on a transformer coupled stub 4, and to the expansion port 5 of the A500. The A500 is a standard machine and no additional memory or disk drives are required to host the interface or software. The System may also be connected to a printer 6 to provide hard copy.

The following is a brief description of the interface 3.

The interface 3 consists of two cards, a 1553 card 7 which connects to a 1553B dual redundant bus, and a Memory Card 8 which provides a 16k word dual port ram buffer between the 1553 card 7 and the Computer 2. When the 1553 card 7 detects a word on the 1553 bus 1 it transfers the previous word, a 24 bit time value and a tag word to the memory card as 3x16 bit words. The memory card 8 also contains a memory address register which can be read by the Computer 2.

The 1553 card 7 has two counters 9 and 10 which are used to detect the end of minor cycles. The first, the dead period timer, (DPT) 9, 'looks' for the dead or inactive period at the end of a minor cycle period and the second, the minor cycle timer (MCT) 10 'looks' for a minor cycle period in which the inactive period is not long enough for the first timer to count down. If either counter reaches zero then the Computer 2 is interrupted and the interface memory address register is updated. When the DPT 9 reaches zero it reloads the MCT 10. The DPT 9 timer thus remains in sync with the bus 1 and provides a safety net for the first.

The interface 3 extracts the data from the bus and generates a 'tag' word which describes the type of word, command, data or status and gives additional information such as which bus the word was on and word validity. It also generates a 24 bit time value which represents the time between words in micro seconds.

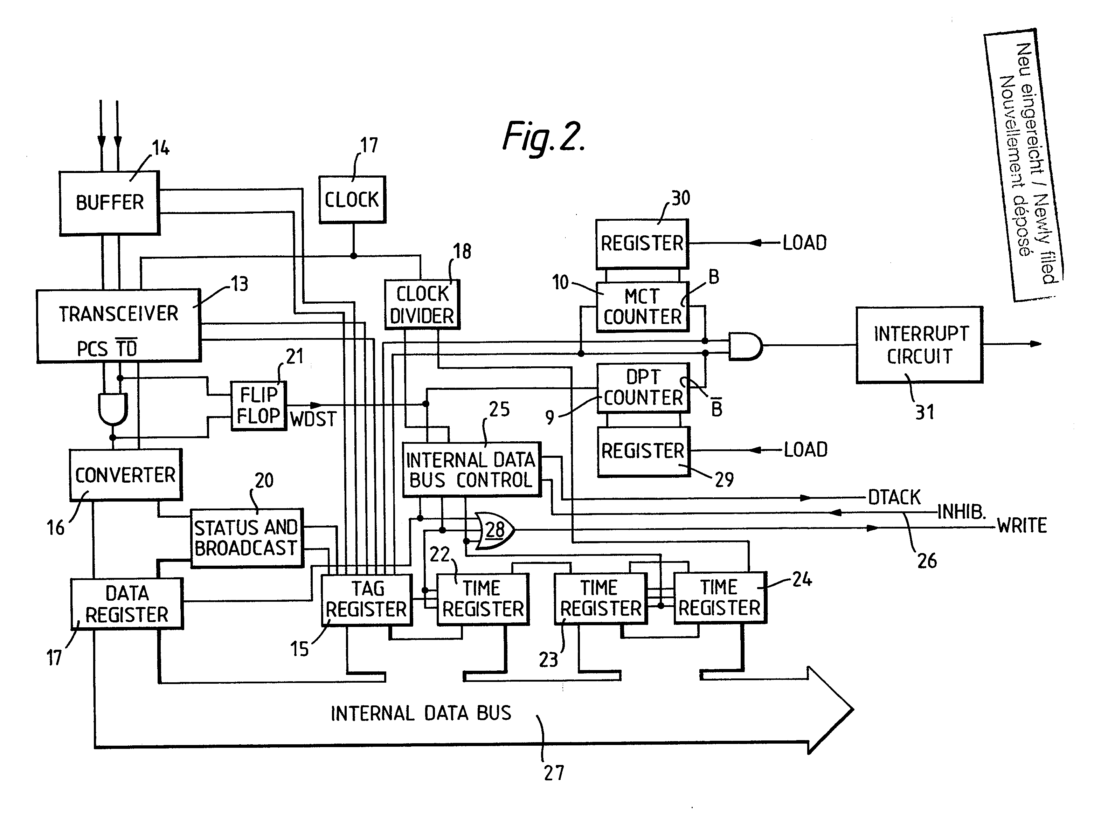

Figure 2 shows the 1553 card 7 in greater detail which is constructed around a Harris 15530 transceiver 13 used as a receiver only. The transceiver 13 receives signals from the dual data bus 1 via the transformer coupled stub and buffer 14. The buffer 14, which includes a dual bus combiner also provides an indication of the current bus and "twobus" errors to a tag register 15. The transceiver 13 converts the input Manchester bi-phase signals into a normal serial data stream for input to a serial to parallel converter 16. It also detects the type of sync pulse at the start of each word, checks the word for validity, provides DCS output, a 1MHz clock synchronised with the bus traffic, and indicates when a word has been received via Take Data (TD). Sync type and validity are latched and applied to the tag register 15.

A clock pulse generator 17, running at 12 MhZ clocks the transceiver 13 and also drives a clock divider 18, configured to divide by two and twelve to produce 6MHz and 1MHz clock signals.

The TD and DCS outputs from the transceiver 13 are ANDed together to create a clock for the serial to parallel converter 16 whose output is fed to a data register, 19. An additional circuit 20 on the output of the serial to parallel converter 16 uses the illegal sub-address 8 method to separate status words from commands and detects address and broadcast, for the tag register 15. The TD output also provides the load control for the data and tag registers 19 and 15 and is used to clock a flip-flop 21 which is reset by the shift register clock to give a short pulse (WDST) at the beginning of every word.

Three time registers 22, 23 and 24 are connected as a counter chain and are clocked by the internal 1MHz signal, reset by WDST and their outputs are latched by TD. The output of the counter chain thus contains the time between the WRST and TD pulses, which is the time between sync's on the data busses to the nearest 1uS. It should be noted that the 1MHz internal clock is not synchronised with the TD and WDST pulses. This will result in a 0 to -1uS error for each value, the synchronous output from the transceiver 13 not being available between words. The 16 least significant bits of the counter chain form a register in there own right and the top 8 bits are combined with the 8 bits of the tag to form another.

The operation of the transceiver 13 is such that it is the beginning of each word which causes the previous word to be read from the shift register. Thus the first word written is meaningless and the last word on the bus can never by obtained.

An internal data bus control circuit 25 is provided for generation of "DTACK" and "write" signals for the computer 2 and memory card 8 respectively. The control circuit 25 is clocked by a 6MHz signal from the clock divider 18 and by the WDST signal. The control circuit 25 comprises a flip-flop (not shown) clocked by WDST causing a 'one' to appear on its Q output. this is ANDed with an inhibit signal from the Memory Card 8 on line 26 and fed to the data input of a shift register (not shown) which is clocked continually at 6MHz. Feedback from the first stage of the shift register resets the flip-flop causing a single 166nS pulse to 'travel' along the shift register outputs.

The first, third and fifth stage outputs of the shift register enable the outputs of the time, tag and data registers in turn, which are connected in parallel to an Internal Data Bus 27. The three enable outputs are ORed by a gate 28 to provide "write" pulses to the memory card 8. A second flip-flop contained within the control circuit 25 inhibits the generation of a DTACK signal when necessary, thus the "write" to the memory board 8 will be delayed if a computer "read" is taking place and a computer "read" will be held off until after three write pulses have completed.

The last word of each minor cycle will have an associated time value which is the amount of time remaining at the end of that minor cycle, plus 20uS for the word itself. This time can be used to calculate the time used in a minor cycle by subtracting it from the minor cycle period. Detection of the end of a minor cycle results in the generation of an interrupt signal which is transmitted to the computer 2. The DPT 9, which detects the inactive period at the end of a minor cycle is comprised of four, four-bit counters chained to form a 16-bit "down" counter. This is clocked at 1MHz and reloaded at the beginning of every word with the value contained in a register, 29 which is loaded by the computer 2. If the DPT 10 reaches zero, the borrow output, will go low and cause the computer 2 to be interrupted and the MCT 10 to be re-loaded. The MCT 10 times out after a period of one minor cycle if the DPT 9 has not detected a sufficiently long inactive period during that interval.

The MCT 10 is also formed around four, four-bit counters and clocked at 1MHz. It is re-loaded from a register 30 either when the DPT 9 reaches zero or it counts down to zero itself, and then is held in this re-load state until the next WDST pulse. If the MCT 10 counts down to zero it will also interrupt the computer 2. In order to generate a computer interrupt signal, both "borrow" outputs of DPT 9 and MCT 10 are ANDed and the resulting signal is applied to an interrupt circuit 31. This circuit 31 is formed around a flip-flop (not shown) which is clocked when either of the aforementioned "borrow" outputs go low. A subsequent interrupt signal generated by said flip-flop is applied to the computer 2 via a host address decoder (not shown).

While the DPT 9 or the MCT 10 have timed out and the next WDST pulse has not reset them, this status is latched to be written to the tag register 15 for the last word of the minor cycle.

If the register 29 is loaded with a value longer than the longest intermessage gap and the register 30 is loaded with one fractionally less than the minor cycle period then either DPT 9 or MCT 10 must interrupt the computer 2 after the end of traffic at the end of each minor cycle. Because the DPT 9 effectively resets the MCT 10 at the beginning of each minor cycle the MCT 10 becomes synchronised with this point. If then the DPT 9 fails for a period of several minor cycles the MCT 10 will continue in synchronisation with the bus 1.

When a "write" signal is generated by the internal data bus control circuit 25, the read/write inputs of the ram buffer are pulsed and the memory address counter on memory card 8 is incremented. Thus the three 16-bit words from the time, tag and data registers are written into the ram buffer at consecutive locations. Data stored in the ram buffer is read by the computer 2 via the host address decoder.

The program for the computer is written in 68000 assembler language giving the highest possible speed for operation. The program is based around a number of functional windows each accessible through the menu attached to the window which opens when the program first runs.

The interaction between the interface unit 3 and the computer 2 is interrupt driven. The interface unit 3 will generate a level 6 interrupt when either the DPT9 or MCT10 counts to zero thereby allowing the program to increment its minor cycle count and to extract the time which remained at the end of the prior minor cycle. A check is made to ensure that this is a valid interrupt, ie, that the interface address pointer has changed. The value in the interface address pointer is copied to computer memory ready for the next valid interrupt. The interface 3 will then have placed the time between the last and first words of adjacent minor cycles in the ram buffer. By subtracting this from the total available minor cycle time the bus loading for that minor cycle can be calculated. This routine also totals the minor cycle times for a Major Frame and checks each minor cycle time to see if it is a new peak value, storing it if it is. Finally the routine checks to see if the bus loading for the minor cycle was above a threshold trigger value set by default or from the Preset Window.

A top level window is the window on the display 11 which opens when the program is first run and has a title "Hello There". To access the main menu it will always be necessary to activate this window by 'clicking' a left button on the mouse 12 on some part of it This window may be moved using a drag bar, by placing the pointer on the drag bar at the top of the window and holding the mouse button down whilst moving the mouse 12. It may also be pushed behind or pulled in front of other windows using back and front gadgets in the top right hand corner.

Clicking on the close gadget in the top left hand corner of this window will terminate execution of the program.

The menu is displayed by pressing a right button on the mouse 12, this will initially cause only the menu bar containing the menu titles to be displayed at the top of the screen (NB, screen here refers not to the physical display itself) but to the Computer 2 screens, which are virtual and can be moved on the display 11. By positioning the pointer on the appropriate title of the menu bar, still holding the right mouse button down, the options for that menu become visible. Moving down the options will cause each to be highlighted and releasing the button whilst an option is highlighted will cause that option to be selected.

There are three option list available from this menu; function, display and output. The function list contains only the preset item, this will open the preset window. There are two display option items, bus loading and stack, selecting either of these will open the appropriate window. Whilst a sub window is open the appropriate items in the menu will remain deactivated (ghosted), preventing duplicate windows being opened. There are also two items, bus loading and stack, available from the output options. Selecting either of these will cause a requester to appear on the screen 11.

If the bus loading item is selected from the output options then the only parameter required is the name of the file the data is to be sent to. The bus loading requester can be closed by hitting return after the name has been typed in, or clicking the mouse button on the OK gadget. If the stack item is selected then in addition to the name of the file the first and last line numbers of the stack are expected. The stack requester can only be closed by using the OK gadget. If there is an error in the file name for either gadget or in the line numbers for the stack gadget then the requester will reappear with an appropriate error message. Either option can be aborted using the cancel gadget at any time.

A preset window on the display 11 displays five gadgets, four string gadgets and one boolean, which allow the modification of the primary present values of the system. It may be moved using the drag bar and pushed and pulled using the front and back gadgets. It is opened by selecting the Presets from the functions options on the Toplevel Window menu. Any new values entered on this window are not used by the system until it has been closed using the reset gadget as described below.

The Inactive Period value (IAP) determines the period for the counter which detects the inactive or dead periods at the end of the minor cycle. Its value is not directly critical to the accuracy of the system, but is fairly critical to the systems operation. Choosing a value for this parameter will depend on the bus and bus controller being monitored. The value chosen should lie between the longest inter-message gap or response time and the shortest inactive period in the most heavily loaded minor cycle. In some cases there may be a problem achieving this, ie, because of long gaps before acyclic traffic and high bus loading. In this case it is only critical to ensure that the IAP be greater than the largest intermessage gap within any minor cycle. This is because the MCT 10 can be expected to maintain synchronisation with the bus virtually indefinitely given only a few hundred microseconds at the end of the minor cycle, and for shorter periods with smaller gaps. To modify the IAP move the pointer over the current value and press the left mouse button. The current value may then be edited using the keyboard and cursor keys or deleted and a new value typed in.

The second gadget is used to set the Number of Minor Cycles in a minor frame. This value not only affects the Bus loading display format but also sets the default value for the Minor Cycle Period, based on a one second major frame period, see below. To modify the Number of Minor Cycles per Major Frame position the cursor over the current value for this and modify as for the IAP. The new value must be in the range 16 to 100.

The third preset gadget sets the value for the Minor Cycles Period. This is normally set by default when the Number of Minor Cycles is changed.

This value is always critical to the accuracy of the system, as it is used to work out bus loading as a percentage. The value can become critical to the operation of the bus when the bus is heavily loaded and the IAP is quite long. In these cases the system relies on the MCT 10 in the hardware to maintain synchronisation with the bus. This timer is loaded with value of 200 _S less than the value input here, the reduction being to allow time for the interrupt to occur and to help the system to re-acquire synchronisation if it has lost it. If the default value is different from that required then it may be edited as described above. Only the least significant 16 bits will be used.

The fourth gadget sets the Loading trigger value. This value is used by the software to determine the bus loading value for a minor cycle above which to automatically open the Stack Window. It is modified as described above. The value must lie between 0 and 100%.

The fifth gadget is the boolean Reset gadget and is used to close the present window, passing the new values to the interface.

A Bus Loading Window on the display 11 displays the current, peak and average bus loading values for each of the minor cycles in a Major Frame and the peak and average for the current Major Frame. It may be moved using the drag bar, resized using the resize gadget in the lower right hand corner, closed using the close gadget and pushed and pulled using the front and back gadgets. Resizing the display causes the recalculation of a number of internal parameters and will as a result reset the peak and average values. It is opened by selecting Bus Loading from the display options from the Toplevel Window menu.

The values for the minor cycles are drawn graphically, but the current values for an individual minor cycle can be displayed numerically, by placing the pointer over the minor cycle of interest and clicking the left mouse button. This action will cause a small Minor Cycle Data (MCD) Window to be opened as close to the pointer as possible, displaying the numeric data. to close this MCD Window simply click on another minor cycle to display the information for that cycle or click on a section of the background fo the bus loading window dow remove the MCD window completely.

The average of all the minor cycles over a major frame and the peak of this value are also displayed graphically and numerically to the right of the window, the peak value being displayed above the average.

A Stack Window on the display 11 displays the data held in the interface buffer in a similar manner to the stack on a Loral SBA 100 Conic. It can be moved using the drag bar pushed and pulled using the front and back gadgets and closed using the close gadget. It is opened either by selecting Stack from the display options on the Toplevel Window menu or when a minor cycle bus loading equals or exceeds the trigger value set in the presets window, if it is not already open.

The format of the stack is essentially the same as the conic except for the display of time. In the stack display the times shown are word sync to sync times rather than time for whole message, with any time values of 20us being suppressed. Thus a displayed value for time of 27 _S attached to a status word following a transmit command would indicate a 7 _S response time for the transmitting RT.

If the window is opened automatically then there will, if available, be two minor cycles worth of data at the top of the stack. The first will be the one which exceeded the threshold and the second will be te succeeding minor cycle. The second minor cycle will be incomplete in that the last word will have been unavailable at the time it was displayed, however the first will be complete in all respects. The Stack will open with the word which caused the trigger displayed at the top of the stack.

If the window is opened by selecting it from the Toplevel Window menu than the latest available data will appear at bottom of the stack and the oldest at the top. If the interface ram buffer 8 has not been filled since the last time the system was reset, or the data copied to the stack. In that case the old data which was already in the stack may not be in sync with that written since the reset and will therefore appear as garbage at the top of the stack. The data in the lower portion of the stack will be correctly displayed. To avoid this problem do not open the Stack window until sufficient time has passed for the buffer 8 to have filled.

A scroll bar, at the right hand edge of the window allows movement up and down the stack as follows: Clicking on either of the gadgets at the top and bottom of the scroll bar will move the display one line at a time. Holding the left mouse button down on either will cause the stack to scroll line by line. clicking on the body of the scroll bar above or below the scroll box will cause the display to move one block up or down. to position the display at any point in the display place the pointer on the scroll box and holding down the left button move the mouse up or down, releasing the mouse button when the scroll box is in the correct position.

Like the Toplevel Window the Stack window has an attached Menu. To access this menu it is necessary that the Stack be the active window, ie, that its title not be ghosted. This can be achieved by clicking the left mouse button on any part of the window. The menu items can then be selected as described for the Toplevel Menu.

There is only one option list on the Stack Menu, all concerned with positioning the start of the stack display within the stack memory. There are six items in this list; Line, Value, Next, Prev, Top and Bottom.

Selecting the Line item will cause a requester to appear. Type the required line number into the requesters string gadget and hit Return/Enter or click on the 'OK' gadget and the stack will redisplay starting with the required line.

Selecting the Value item will also cause a requester to appear. In this case it is possible to type one of a number of things into the string gadget of this requester. A bus word, ie, command, status or data can be entered as CBH T BH BH, SBH B BH BH or DHHHH where H represents a hex, B a binary digit and T a value of 'T' or 'R'; 'X's may also be entered to indicate don't cares. The next occurrence matching this word will then be brought to the top of the stack. Similarly a time value TCCDDDDDDDDD in _Secs can be entered where D represents a decimal digit and CC a condition code: '>', '> =', '<', '< =' or '=' which, along with leading zeros, may be omitted in that case the default will be '='. Again the stack will be searched and the next line fitting the requirement will be brought to the top of the stack.

In either case if no match can be found the requester will automatically reappear. If a further search is required then edit the string as before and press return or click on the 'OK' gadget. If no further search is required then click on the 'cancel' gadget.

The selecting 'Next' item repeats the search for the next value down the stack which matches that in the Value Requesters string gadget if this is not found the requester is brought back to be edited or cancelled. It can also be invoked using the Computer 2 and 'n' keys.

The selecting 'Prev' item repeats the search for the previous value up the stack which matches that in the Value Requesters string gadget if this is not found the requester is brought back to be edited or cancelled. It can also be invoked using the Computer 2 and 'p' keys.

The 'Top' item causes the stack to be redisplayed with the first line of the stack at the top of the display. It can also be invoked using the Computer 2 and 't' keys.

The Bottom item causes the stack to be redisplayed with the last line of the stack at the bottom of the display. It can also be invoked using the Computer 2 and 'b' keys.

## Claims

1 A digital data bus loading monitor characterised in that it comprises a general purpose computer (2) programmed to compute and output signals corresponding to data bus loading parameters, an interface unit (3) including a random access memory (8) and at least one data cycle counter (9, 10) and connected to the general purpose computer (2), and coupling means (4) for coupling the interface unit (3) to a multi-channel digital data bus (1).

2 A digital data bus loading monitor as claimed in Claim 1 in which said bus (1) operates with a timing structure composed of major frames subdivided into a muliplicity of minor cycles and wherein the interaction between the interface unit (3) and the programmed computer (2) is interrupt-driven such that the interface unit (3) generates an interrupt signal whenever the data cycle counter (9,10) counts to a predetermined value, at which point the computer (2) reads the time remaining at the end of the most recent minor cycle and the random access memory (8) records the time between the last and first words of adjacent minor cycles.

3 A digital data bus loading monitor as claimed in Claim 1 or Claim 2 and wherein the coupling means (4) comprises a transformer coupled stub.

4 A digital data bus loading monitor as claimed in any preceding Claim and further including a display device (11) connected to the computer (2) for graphically displaying the loading of each data bus channel in bar-code form.

# Fig.1.

Fig.2.

EP 0 379 350 A2